**Europäisches Patentamt**

(19) **European Patent Office**

**Office européen des brevets**

(11) Publication number : **0 325 273 B1**

## (12) EUROPEAN PATENT SPECIFICATION

(45) Date of publication of patent specification :
08.07.92 Bulletin 92/28

(51) Int. Cl.⁵ : **B01D 59/34**

(21) Application number : **89100961.5**

(22) Date of filing : **20.01.89**

(54) **Method for the enrichment of carbon 13 by means of laser irradiation.**

The file contains technical information
submitted after the application was filed and
not included in this specification

(30) Priority : **21.01.88 JP 11555/88**

(43) Date of publication of application :
**26.07.89 Bulletin 89/30**

(45) Publication of the grant of the patent :
**08.07.92 Bulletin 92/28**

(84) Designated Contracting States :
**DE FR GB**

(56) References cited :
**US-A- 4 436 709
CHEMICAL ABSTRACTS, vol. 101, 1984, page
436, abstract no. 218209a, Columbus, Ohio,
US; M. GAUTHIER et al.:
"Second-stage enrichment in the laser sepa-
ration of carbon isotopes", & APPL. PHYS. B
1984, B35(3), 173-7**

(56) References cited :
**CHEMICAL ABSTRACTS, vol. 102, 1985, page
449, abstract no. 68995h, Columbus, Ohio, US;
S. ARAI et al.: "Carbon-13 separation by
IRMPD of mixtures of perfluoroethane and
molecular bromine", & CHEM. PHYS. LETT.
1984, 112(3), 224-7**

(73) Proprietor : **RIKAGAKU KENKYUSHO
2-1 Hirosawa
Wako-shi Saitama-ken (JP)**

(72) Inventor : **Arai, Shigeyoshi
Fushimi-godoshukusha 821 Nishibugyo-cho
Fushimi-ku Kyoto-shi Kyoto-fu (JP)**
Inventor : **Sugita, Kyoko
23-14-502, Koishikawa 2-chome
Bunkyo-ku Tokyo (JP)**
Inventor : **Isomura, Syohei
3-8, Toyotamakita 1-chome
Nerima-ku Tokyo (JP)**
Inventor : **Kaetsu, Hayato
986-7, Otagaya Tsurugashima-cho
Iruma-gun Saitama-ken (JP)**

(74) Representative : **Vossius & Partner
Siebertstrasse 4 P.O. Box 86 07 67
W-8000 München 86 (DE)**

## Description

This invention relates to a method for the enrichment of carbon 13 by use of laser rays and particularly to a method for the enrichment of carbon 13 by means of laser isotope separation by way of infrared multiple-photon decomposition.

Natural carbon comprises isotopes of mass numbers 12 and 13, the ratios of which are 98.9% and 1.1%, respectively. Conventional methods for the enrichment of carbon 13 are based on low temperature distillation of CO, but these methods have the disadvantages that it is necessary to use a large amount of poisonous gas and a large scale apparatus, and that the manufacturing costs are high. Therefore, it is desirable that carbon 13 is separated safely and cheaply by use of laser irradiation.

Prior art methods for the enrichment of carbon 13 by laser irradiation will now be explained.

A working substance such as $CF_3X$ (wherein X is Cl, Br or I), or $CF_2HCl$ is irradiated with laser rays emitted from a $CO_2$ laser. In the infrared multiple photon decomposition of $CF_3X$, the final product is $C_2F_6$. In the infrared multiple photon decomposition of $CF_2HCl$, the final product is $C_2F_4$. The final products are enriched with carbon 13.

In this method, if a practically significant high yield is intended, the ratio of carbon 13 after the enrichment is only 80% and does not reach the ratio obtained in the conventional enrichment methods using low temperature distillation of CO.

In the method described in JP-A-60/132629 (1985), $C_2F_6$ is irradiated in the presence of $Br_2$ with pulsed laser rays emitted from a $CO_2$ laser with adequate wavenumber and fluence. As a result of the photo-dissociation and the subsequent reaction, $CF_3Br$ is produced which is enriched with carbon 13 to a ratio of 20% to 30%. Next, the product $CF_3Br$ is separated and once more irradiated with pulsed laser rays emitted from a $CO_2$ laser under particular conditions to induce an infrared multiple photon decomposition. The product of the second infrared multiple photon decomposition is $C_2F_6$, in which the ratio of carbon 13 is increased to 90%.

Based on the knowledge obtained from the above investigations, we invented a new method for the enrichment of carbon 13 by use of multistage laser irradiation. Namely, the laser irradiation is used several times in order to gradually increase the concentration of carbon 13 because if laser irradiation is used only once, the degree of enrichment does not exceed a limitation.

An object of this invention is to provide a method fulfilling the following requirements which are important from the view point of practical use, i.e. that the working substance easily causes the multiple photon decomposition, the working substance is largely and cheaply obtainable, the product of the first infrared multiple photon decomposition is directly usable in the second decomposition and the materials obtained during the decomposition process are reusable.

The present invention relates to a method for the enrichment of carbon 13 by use of a multistage laser irradiation. The present invention is characterized in that a mixture of $CHClF_2$ and $Br_2$ is used as the starting material. The mixture is irradiated with laser rays emitted from a $CO_2$ laser to obtain $CBr_2F_2$ enriched with carbon 13. This $CBr_2F_2$ enriched with carbon 13 is once more irradiated with laser rays emitted from a $CO_2$ laser to produce $C_2Br_2F_4$ which is further enriched with carbon 13.

Alternatively, the product $CBr_2F_2$ of the first laser irradiation is once more irradiated together with $O_2$ to product $COF_2$ which is further enriched with carbon 13.

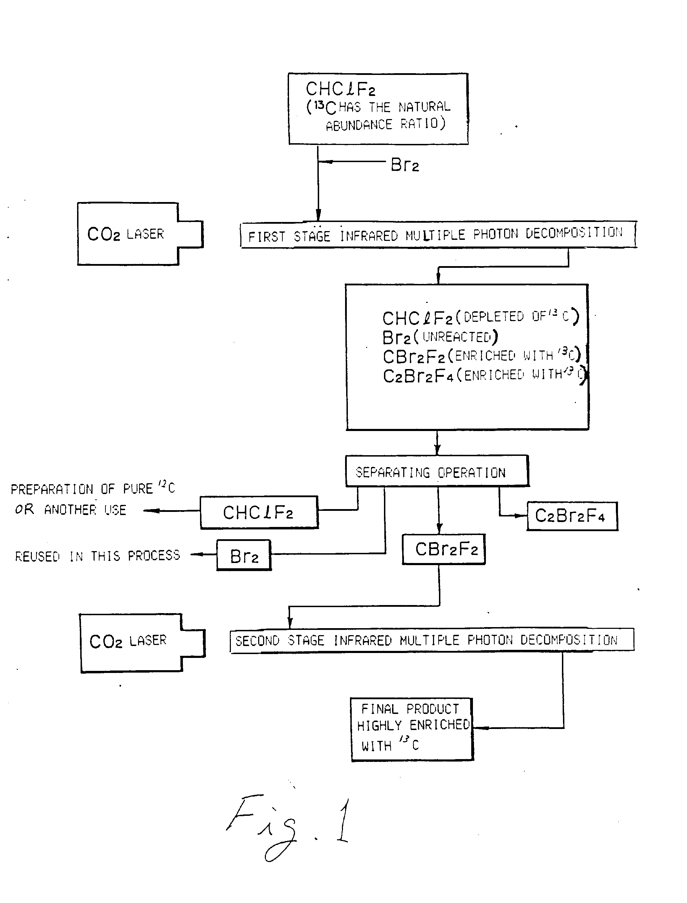

Fig. 1 schematically shows the reaction process according to this invention.

When natural $CHClF_2$ is irradiated with pulsed laser rays emitted from a $CO_2$ TEA Transversely excited atmospheric pressure laser, $CF_2$ and HCl are obtained by infrared multiple photon decomposition. The laser rays must be mildly focused by a lens in order to induce the decomposition. If the wavenumber of the laser rays is about 1030 to 1050 cm$^{-1}$ and the fluence is below 10 Jcm$^{-2}$, the product $C_2F_4$ is enriched with $^{13}$C. This result is explained by the following reaction mechanism.

$$CHClF_2 + nh\nu \rightarrow CF_2 + HCl \quad (1)$$
$$CF_2 + CF_2 \rightarrow C_2F_4 \quad (2)$$

The reaction (1) represents the process that $CHClF_2$ absorbs a large number of photons. This causes decomposition. Under the above described irradiation conditions, molcules including $^{13}$C are selectively decomposed and $CF_2$ radicals including a large amount of $^{13}$C are generated. According to the coupling reaction of radicals (2), $C_2F_4$ enriched with $^{13}$C is produced.

When a large amount of $Br_2$ exists in the reaction system, the following reactions will occur:

$$CF_2 + Br_2 \rightarrow CBrF_2 + Br \quad (3)$$
$$CF_2 + Br_2 \rightarrow CBr_2F_2 \quad (3')$$
$$CBrF_2 + Br_2 \rightarrow CBr_2F_2 + Br \quad (4)$$
$$CBrF_2 + CBrF_2 \rightarrow C_2Br_2F_4 \quad (5)$$
$$Br + Br \rightarrow Br_2 \quad (6)$$

2

The $CF_2$ radicals enriched with $^{13}$C react to $CBrF_2$ radicals in the reaction (3) or to $CBr_2F_2$ in the reaction (3'), so that the reaction (2) is completely prevented. In consequence of the subsequent reactions (4) and (5), $CBr_2F_2$ and $C_2Br_2F_4$ are obtained as products. The relative ratio thereof varies depending on the laser irradiation conditions and the added amount of $Br_2$. But the yield of $CBr_2F_2$ is much greater than that of $C_2Br_2F_4$. The obtained $CBr_2F_2$ is highly enriched with [13]C.

As a result of the $^{13}$C selective infrared multiple photon decomposition of the mixture of natural $CHClF_2$ and $Br_2$, (a) $CHClF_2$ depleted of $^{13}$C, (b) $CBr_2F_2$ enriched with $^{13}$C, (c) $C_2Br_2F_4$ enriched with $^{13}$C, (d) HCl, and (e) unreacted $Br_2$ exist in the reaction system. In order to separate each composition, a low temperature distillation method can be used in view of the distinct boiling points points ($CHClF_2$ - 40.8°C, $CBr_2F_2$ 24.5°C, $C_2Br_2F_4$ 47.3 °C, HCl - 85°C, $Br_2$ 58.8°C). Alternatively, if the amount to be processed is small, the separation can be caused by a preparative type gaschromatograph having a column packed with silica gel.

As a result, $CHClF_2$, $CBr_2F_2$ and $C_2Br_2F_4$ are almost completely separated.

In the infrared absorption spectrum of natural $CBr_2F_2$, a strong absorption band is recognized at 1095 $cm^{-1}$. This is due to stretching vibration of the $^{12}$C-F bond. The wave number of the absorption band due to the stretching vibration of the $^{13}$C-F bond is lower than that of the $^{12}$C-F bond by 20 to 30 $cm^{-1}$, that is, 1065 to 1075 $cm^{-1}$. Therefore, in the infrared multiple photon decomposition of $CBr_2F_2$ there is a large isotope effect concerning carbon. When natural $CBr_2F_2$ of 666Pa (5 Torr) is irradiated with pulsed laser rays at a wave number of 9P(28), that is, 1039.37 $cm^{-1}$ and a fluence of 3 J $cm^{-2}$ generated by a $CO_2$ laser, $C_2Br_2F_4$ is produced according to the following reaction mechanism as a main product, and the abundance ratio of $^{13}$C reaches 40%.

$$CBr_2F_2 \ + \ nh\nu \rightarrow CBrF_2 \ + \ Br \quad (8)$$
$$CBrF_2 \ + \ CBrF_2 \rightarrow C_2Br_2F_4 \quad (9)$$
$$Br \ + \ Br \rightarrow Br_2 \quad (10)$$

There is a great selectivity for $^{13}$C in the photochemical decomposition process of the reaction (8).

Therefore, if the $CBr_2F_2$ products obtained by the first laser irradiation are further irradiated with laser rays emitted from a $CO_2$ laser, the second stage infrared multiple photon decomposition causes the final product to be highly enriched with [13]C.

On the other hand, when $CBr_2F_2$ is irradiated together with $O_2$, the final product becomes $COF_2$ which is also enriched with [13]C.

According to this invention the enrichment of carbon 13 is quite easily accomplished by multistage laser irradiation, and carbon 13 can be obtained in high yield. Since the starting material $CHClF_2$ is largely and cheaply manufactured and substances obtained during the reaction process are reusable, this invention brings a great advantage when it is industrially used.

$CO_2$ is adequate as starting material for synthesising organic compounds labeled by [13]C. When the second stage infrared multiple photon decomposition occurs in the mixture of $CBr_2F_2$ and $O_2$ and the product is subsequently treated with water, $CO_2$ enriched with $^{13}$C is directly obtained.

The specific nature of this invention, as well as other objects, uses and advantages thereof, will be clear from the description and the accompanying drawing.

Fig.1 is a flowchart illustrating steps to obtain a final product enriched with $^{13}$C according to this invention.

## EXAMPLE

A $CO_2$ TEA laser was calibrated to oscillate and emit laser rays at the 9P(22) line of about 4J/pulse. The wavenumber of the laser rays was 1045.02 $cm^{-1}$. The laser rays were focused by a long focal lens and a mixture of $CHClF_2$ of 6.6 kPa (50 Torr) and $br_2$ of 1.3 kPa (10 Torr) was irradiated therewith, which mixture was enclosed in a reaction cell of about 3 m in length and 5 lit in volume with windows of NaCl at opposite ends. The number of irradiated pulses was restricted so that about 0.5% of $CHClF_2$ was decomposed. The product containing carbon was mainly $CBr_2F_2$. A small amount of $C_2Br_2F_4$ was also obtained. The irradiated gas was taken into the preparative type gaschromatograph with a column packed with silica gel and of 17.5 mm in diameter and 3.5 m in length, and $CBr_2F_2$ was separated. The results of mass spectrometry for the $CBr_2F_2$ are as follows:

## Table I

Ion signal intensities of $CBrF_2^+$ ion fragments under the irradiation conditions that laser rays were focused by a lens of 1.7 m in focal length and the fluence was 7 J $cm^{-2}$.

| m/e | Relative intensities of ion signals |
|-----|-------------------------------------|
| 129 | 1.00 |
| 130 | 0.43 |
| 131 | 0.98 |
| 132 | 0.42 |

$$^{13}C/(^{12}C+^{13}C)=30\%$$

## Table II

Ion signal intensities of $CBrF_2^+$ ion fragments under the irradiation conditions that the laser rays were focused by a lens of 3.0 m in focal length and the fluence was 2.2 J $cm^{-2}$.

| m/e | Relative intensities of ion signals |
|-----|-------------------------------------|
| 129 | 1.00 |
| 130 | 1.22 |
| 131 | 0.98 |
| 132 | 1.20 |

$$^{13}C/(^{12}C + ^{13}C) = 55\%$$

In the mass spectroscopic analysis of $CBr_2F_2$, the ion signals of $CBrF_2^+$ are strongest. The isotope species thereof are $^{12}C^{79}Br^{19}F^{19}F^+$ (m/e=129), $^{13}C^{79}Br^{19}F^{19}F^+$ (m/e=130), $^{12}C^{81}Br^{19}F^{19}F^+$ (m/e=131) and $^{13}C^{81}Br^{19}F^{19}F^+$ (m/e=132). In the case that the laser rays were focused by a lens of 3 m in focal length, the ratio of $^{13}C$ in the $CBr_2F_2$ molecule reached 55%.

Next, $CBr_2F_2$ (the ratio of $^{13}C$ atoms was 30 %), which was produced in the first stage infrared multiple photon decomposition and separated, was given into a reaction cell and irradiated with pulsed laser rays at the 9P(28) line, that is, 1039.37 $cm^{-1}$ emitted from a $CO_2$ laser apparatus. The fluence of the laser rays was 3.3 J $cm^{-2}$ and the number of the irradiated pulses was 100. $CBr_2F_2$ was under a pressure of about 1.3 kPa (10 Torr). The product was $C_2Br_2F_4$. The ratios of $^{12}C$ and $^{13}C$ atoms in the $C_2Br_2F_4$ molecules, which were measured by means of gas chromatography(GC) and mass spectrometry(MS), are shown in Table III.

Table III

| Ion species | m/e | Relative intensities of ion signals |
|---|---|---|
| $^{12}CF^+$ | 31 | 0.05 |
| $^{13}CF^+$ | 32 | 1.00 |

$$^{13}C/(^{12}C + {}^{13}C) = 95\ \%$$

In the gas chromatography, a column of 3 mm X 6 m billed with Gaskuropack® 55 was used at 150°C. The ion, which was measured by the mass spectrometer, was $CF^+$. It was found that the ratio of $^{13}C$ had increased to 95%.

On the other hand, $O_2$ at 1.3 kPa (10 Torr) was added to $CBr_2F_2$ (the ratio of $^{13}C$ atoms was 30%) at 1.3 kPa (10 Torr). The mixed gas was irradiated with 300 laser pulses under the same irradiation conditions, namely that the wavenumber of the laser rays was 1039.37 $cm^{-1}$ and the fluence was 3.3 J $cm^{-2}$. When $O_2$ was present, the product was $COF_2$. When $H_2O$ reacted with this product, it rapidly changed to $CO_2$. The ratios of $^{13}C$ and $^{12}C$ atoms in the $CO_2$ molecules, which were measured by GC and MS, are shown in Table IV.

Table IV

| Ion species | m/e | Relative intensities of ion signals |
|---|---|---|
| $^{12}CO_2^+$ | 44 | 0.10 |
| $^{13}CO_2^+$ | 45 | 1.00 |

$$^{13}C/(^{12}C + {}^{13}C) = 91\ \%$$

From this result it was found that the ratio of $^{13}C$ had increased to 91 %.

## Claims

1. A method for the enrichment of carbon 13 by means of laser irradiation, including the steps of

irradiating a mixture of $CHClF_2$ and $Br_2$ with laser rays emitted from a carbon dioxide gas laser to produce $CBr_2F_2$, and

irradiating the produced $CBr_2F_2$ with laser rays emitted from a carbon dioxide gas laser.

2. The method according to claim 1, wherein a mixture of the $CBr_2F_2$ produced in the first step and $O_2$ is irradiated with laser rays emitted from a carbon dioxide gas laser.

## Patentansprüche

1. Verfahren zur Anreicherung von Kohlenstoff 13 mittels Laserbestrahlung, umfassend die Schritte:

Bestrahlen eines Gemisches von $CHClF_2$ und $Br_2$ mit von einem Kohlendioxid-Gas-Laser ausgesendeten Laser-strahlen, zur Herstellung von $CBr_2F_2$ und

Bestrahlen des hergestellten $CBr_2F_2$ mit von einem Kohlendioxid-Gas-Laser ausgesendeten Laserstrahlen.

2. Verfahren nach Anspruch 1, dadurch gekennzeichnet, daß ein Gemisch von dem im ersten Schritt hergestellten $CBr_2F_2$ und $O_2$ mit von einem Kohlendioxid-Gas-Laser ausgesendeten Laserstrahlen bestrahlt wird.

**Revendications**

1. Procédé d'enrichissement du carbone 13 au moyen d'irradiation laser, comprenant les étapes consistant :

à irradier un mélange de CHClF$_2$ et de Br$_2$ à l'aide d'un rayonnement laser émis à partir d'un laser au gaz carbonique pour donner CBr$_2$F$_2$, et

à irradier le CBr$_2$F$_2$ obtenu à l'aide d'un rayonnement laser émis à partir d'un laser au gaz carbonique.

2. Procédé selon la revendication 1, dans lequel un mélange du CBr$_2$F$_2$ obtenu dans la première étape et d'O$_2$ est irradié à l'aide d'un rayonnement laser émis à partir d'un laser au gaz carbonique.

CHC$l$F$_2$
($^{13}$C HAS THE NATURAL ABUNDANCE RATIO)

— Br$_2$

CO$_2$ LASER

FIRST STAGE INFRARED MULTIPLE PHOTON DECOMPOSITION

CHC$l$F$_2$ (DEPLETED OF $^{13}$C)
Br$_2$ (UNREACTED)
CBr$_2$F$_2$ (ENRICHED WITH $^{13}$C)
C$_2$Br$_2$F$_4$ (ENRICHED WITH $^{13}$C)

SEPARATING OPERATION

PREPARATION OF PURE $^{12}$C
OR ANOTHER USE — CHC$l$F$_2$

REUSED IN THIS PROCESS — Br$_2$

CBr$_2$F$_2$

C$_2$Br$_2$F$_4$

CO$_2$ LASER

SECOND STAGE INFRARED MULTIPLE PHOTON DECOMPOSITION

FINAL PRODUCT HIGHLY ENRICHED WITH $^{13}$C

Fig. 1